(19) Europäisches Patentamt

European Patent Office

Office européen des brevets

(11) **EP 0 399 800 B1**

(12) **EUROPEAN PATENT SPECIFICATION**

(45) Date of publication and mention
of the grant of the patent:
**19.06.1996   Bulletin 1996/25**

(51) Int Cl.⁶: **G11B 5/31**

(21) Application number: **90305596.0**

(22) Date of filing: **23.05.1990**

(54) **Thin film magnetic head manufacturing method**

Verfahren zur Herstellung eines Dünnfilm-Magnetkopfes

Méthode de fabrication de tête magnétique à couches minces

(84) Designated Contracting States:
**DE FR GB IT**

(30) Priority: **26.05.1989   US 358122**

(43) Date of publication of application:
**28.11.1990   Bulletin 1990/48**

(73) Proprietor: **SEAGATE TECHNOLOGY INTERNATIONAL**
**Georgetown, Grand Cayman Island (KY)**

(72) Inventor: **Gau, George Jing-Sheng**
**Santa Barbara California 93110 (US)**

(74) Representative: **Sturt, Clifford Mark et al**
**J. MILLER & CO.**
**34 Bedford Row,**
**Holborn**
**London WC1R 4JH (GB)**

(56) References cited:
**JP-A-62 054 812**

• **PATENT ABSTRACTS OF JAPAN vol. 12, no. 180 (P-709)(3027) 27 May 1988 & JP-A-62 291 711**
• **Philips Technical Review vol. 44, no. 6, December 1988, Eindhoven, The Netherlands, pages 169 - 178; M.G.J. Heijman et al.: "Multi-track magnetic heads in thin-film technology"**
• **PATENT ABSTRACTS OF JAPAN vol. 12, no. 458 (P-794)(3305) 02 December 1988, & JP-A-63 181 107**
• **PATENT ABSTRACTS OF JAPAN vol. 12, no. 288 (P-741)(3135) 08 August 1988, & JP-A-63 064613**
• **IEEE Transactions on Magnetics, vol. MAG-23, no.5, September 1987, Mark E. Re et al. 'Non uniform response in the pole tips of thin film recording heads' page 3161-3163**

## Description

The present invention relates to a thin film magnetic head and to a method for manufacturing such a head.

Thin film magnetic read/write heads are used for magnetically reading and writing information on a magnetic storage medium, such as a magnetic disk or a magnetic tape. It is highly desirable to provide high levels of information storage density on the magnetic storage medium.

One design criteria in a recording system is to provide an areal density as high as possible for a given recording surface without compromising the performance/cost ratio. In the case of rotary disk drives (both floppy and hard disks), the areal density is found by multiplying the number of flux reversals per unit length along the track (linear density in units of flux reversals per inch or centimetre) by the number of tracks available per unit length along the radial direction (track density in units of tracks per inch or centimetre). The areal density has shown a steady increase, doubling about every other three years. A state of the art density is about 100 million bits per inch squared (15.5 million bits per centimetre squared), and the commercial magneto-optic disk has an areal density of 480 million bits per inch squared (74.4 million bits per centimetre squared).

In the past, great efforts have been devoted to maximising the linear density. A higher linear density can be attained by reducing the gap length of the recording head. Furthermore, much attention has been paid to improving the media's characteristics to support shorter magnetic domain transitions such that a higher bit density may be realised. This has been successfully accomplished mainly through a better understanding of the recording physics and micro-magnetics. For instance, magnetic media made by deposition processes which lead to a morphology of isolated particles will have a better resolution and higher signal-to-noise ratios (T. Chen, and T. Yamashita, IEEE Trans. Mag. Mag-24 (1988) p. 2700).

Other references disclosing improved density in this manner include JP-A-62054812 by NEC and JP-A-63064613 by Fujitsu.

In paricular JP-A-62054812 discloses a method of manufacturing a thin film magnetic head with a lower pole having a trapezoidal cross section and an upper magnetic pole having an "inverse trapezoidal" cross section.

The present invention, at least in its preferred form described below, seeks to provide an improved magnetic read/write head and an improved method for manufacturing such a head to enable an increased track density, and thereby an increased areal density, to be obtained.

According to a first aspect of the present invention, there is provided a method of manufacturing a thin film magnetic read/write head, in which a photo-resist layer is exposed to radiation of which a portion is masked by a mask and is developed to provide a photo-resist pattern for forming a pole tip of the magnetic read/write head, characterised by baking the exposed photo-resist layer and further exposing the baked photo-resist layer to radiation in the absence of the mask before the developing step and by the removal of the previously masked portion of the photo-resist layer during the developing step.

The preferred embodiment features a photo-lithographic process, in which a positive photo-resist layer is deposited and the portion which is to form the pole tip is exposed to radiation while the portion where the pole tip is to be deposited is masked off. The photo-resist is then developed, removing that portion which was masked off during the first exposure. The walls of the remaining photo-resist have "negative" slopes. The pole tip may then be deposited in the relief area and will have walls with a "positive" slope. A gap and upper pole tip may then be deposited using standard lithographic techniques. The resulting pole structure provides pole tips having a trapezoidal shape with symmetry across the gap region.

According to a second aspect of the present invention, there is provided a method for manufacturing a thin film magnetic read/write head having an upper pole tip and a lower pole tip, said method comprising: forming the lower pole tip by exposing a first photo-resist layer to radiation, a portion of which is masked by a mask, and developing the layer to provide a first photo-resist pattern for forming the lower pole tip; forming the upper pole tip by depositing gap material on the lower pole tip, forming a further photo-resist pattern defining over the gap material in a space where the further photo-resist pattern is not present, the upper pole tip having opposed walls which converge in a direction towards the gap material, and depositing a layer of permalloy magnetic film to provide the upper pole tip; characterised in that formation of the lower tip further comprises: forming the first photo-resist pattern on a substrate; baking the exposed first photo-resist layer; further exposing the baked photo-resist layer to radiation in the absence of the mask before the developing step; removing the previously masked portion of the first photo-resist layer during the developing step; defining in a space where the first photo-resist pattern is not present, the lower pole tip having opposed walls which converge in a direction away from the substrate; and depositing a layer of permalloy magnetic film to provide the lower pole tip.

Preferably, the pole tips have a trapezoidal shape with the shorter of the two parallel sides for each pole tip being closest the gap. In the preferred embodiment described below, the two pole tips further have substantial mirror image symmetry across the gap.

The present invention thus permits improved track density as a result of the lithographic process for the thin film head fabrication, and a better pole tip design may be obtained by controlling the resist profile.

The invention is described further, by way of example, with reference to the accompanying drawings, in which:-

Figure 1 is a top view of a thin film magnetic read/write head;

Figure 2 is a side view of the thin film head of Figure 1;

Figure 3 shows three photo-resist profiles;

Figure 4 shows the resulting pole tip structure when the photo-resist profiles of Figure 3 are used in the fabrication of pole tips in a thin film head;

Figure 5 is a graph showing the relationship between the slope of the pole tip and the difference in pole tip width between the top and bottom edges of the pole tip for three different pole tip heights;

Figures 6 and 7 show a prior art method of forming pole tips (Figure 6) and a method according to the present invention (Figure 7) side by side for comparison; and

Figure 8 is a cross sectional view of the completed pole tips according to the present invention having mirror image symmetry across the gap region.

The quest for high density recording on magnetic storage media has essentially given rise to the development of miniature integrated thin film heads. Thin film heads, being substantially two dimensional, permit the use of magnetic films with higher permeability and higher saturation induction, resulting in better performance in terms of high resolution and low inductance. In addition, the ability to fabricate the heads in an array is an advantage of thin film heads.

Magnetic heads are an integral part of an air bearing slider, which "flies" over the disk surface. The slider is typically made of sintered ceramics such as a composite of alumina oxide and titanium carbide. In some cases, a magnetic substrate such as Ni-Zn ferrite is used as a shielding material. The batch fabrication of magnetic heads using thin film techniques thus differs greatly from semi-conductor manufacturing.

The batch fabrication of vertically configured thin film magnetic recording heads was summarised by Romankiw et al. (See L.T. Romankiw, and P. Simon, IEEE Trans. Mag. MAG-11 (1975) p. 50). This kind of head design is more stable but requires additional machining techniques, such as micro-scale lapping and grinding, for fabrication. The vertically configured thin film head has since evolved into a more sophisticated design featuring unique paddle shaped poles and a multi-turn/layer coil pattern.

The lithographic process used in fabricating thin film heads first involves the definition of the device pattern; i.e. a latent image in the photo-resist layer, which is then developed out as a relief three dimensional profile. This relief may then be filled with a portion of the thin film head using standard deposition techniques, such as electro-plating.

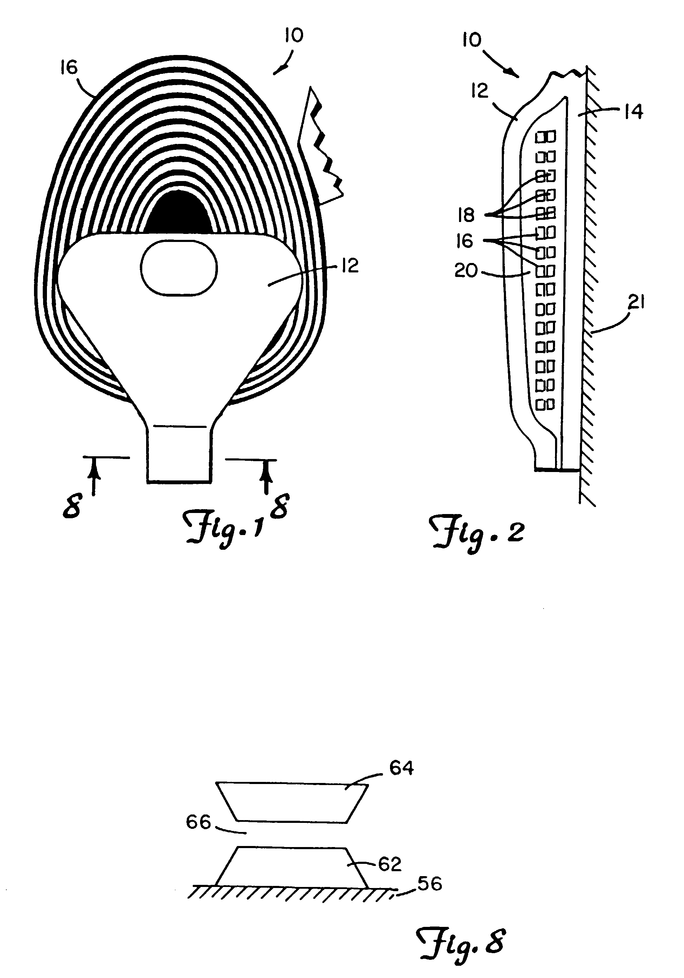

A multi-turn inductive thin film head 10 is shown schematically in Figures 1 and 2, in which Figure 1 is a top view while Figure 2 is a side cross sectional view. Lithography is used to define the geometry of both top and bottom magnetic film cores 12 and 14 and copper coils 16 and 18. An insulating layer 20 is also patterned using lithography. In fabricating the thin film head, several separate pattern transfer processes are used to deposit the head upon a substrate 21, including lift off, wet chemical etching and plating/sputtering. A typical head building process may account for more than a dozen masking levels and more than thirty processing steps including deposition, plating and etching.

There are several key parameters in controlling the performance of the device. Throat height and gap length influence the fringing field distribution affecting the linear density and writing efficiency of the head. Optimum device dimensioning requires an in depth understanding of the micro-magnetic phenomenon and extensive device modelling. The line width variation of the top and bottom poles and their alignment accuracy are also crucial because the off track properties affect the achievable track density.

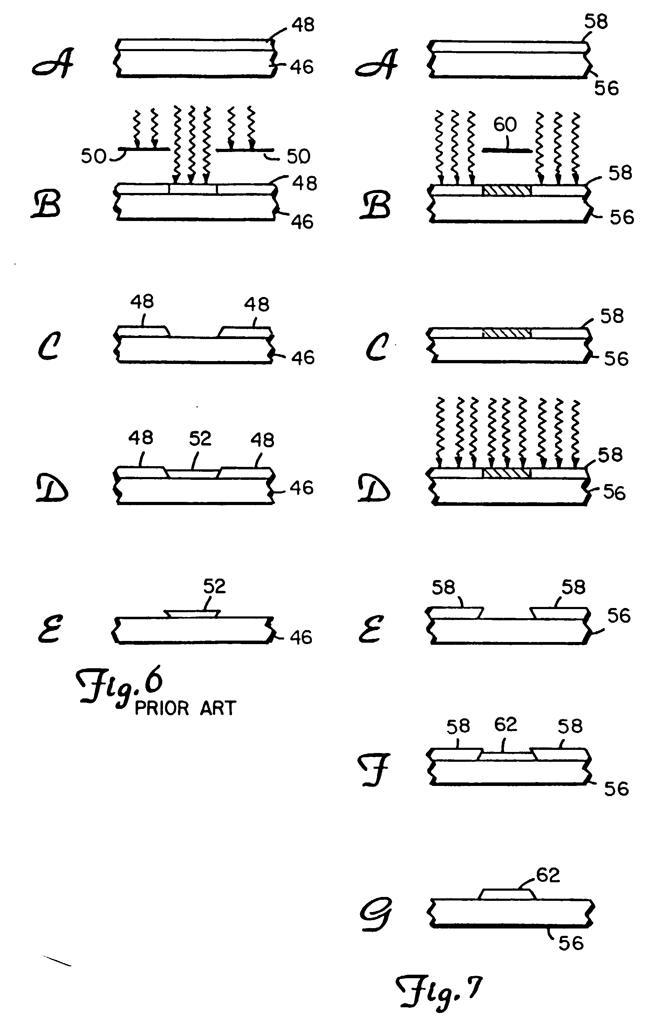

There are two schemes that may be used in fabricating the magnetic pole, either additive or subtractive. As an illustration, the additive approach using the wet process for electro-plating is the dominant scheme and the processing steps involved are summarised below and shown in Figure 6.

The additive approach does add more processing steps and may induce more process variations such as undercut during chemical etching and ion milling. The maturity of plating technology coupled with a better control of composition and stress in the deposited permalloy film, however, is an advantage of the additive approach. Furthermore, it is a low temperature process, in contrast to a sputtering technique.

The highest track density achievable is strongly influenced by how well the pole tip elements can be aligned, and how small the poles can be made with desirable magnetic characteristics. The insatiable need for higher track densities has driven the development of smaller thin film magnetic heads. This is achieved mainly through the reduction of pole tip width, which in turn is reflected in a smaller plating dam width. Magnetic poles typically have a pole length in the range of 2 to 4 $\mu$m, depending upon the optimisation criterion, i.e. a thicker pole for better over-writing efficiency and a thinner pole for better resolution capability. This constraint calls for the use of thick resists with thicknesses targeted in the range of 3 to 6 $\mu$m. Details of the thick resist requirements for thin film heads have been discussed elsewhere. J.S. Gau, Optical/Laser Micro-lithography II, Proc. SPIE 1088 (1989) pp. 1088 to 53. Basically, an ideal resist provides good edge acuity under all processing conditions, yields a consistent thickness, and maintains resist profile during high temperature baking and curing, along with its resistance to chemical etching and milling.

Pole width reduction is limited by the resolution of the resist, and the pole tip geometry is determined by the resist profile. In the additive approach, controlling the shape of a resist profile can be as important as maintaining control of its critical dimension. The side profile is of great significance since off track recording properties are strongly influenced by the side fringing reading and writing of thin film heads due to their finite dimension. The magnetic field emanating from the side surface during writing will play a key role in the formation of the side erasure band, depending upon this side fringing field and corresponding field gradient distribution.

Figure 3 depicts several common resist profiles. A normal profile, the resist profile 22 in Figure 3A, is provided by a typical single layer positive resist and has sloped side walls due to absorption and to the nature of the resist development process. An hour glass profile, the resist profile 24 in Figure 3B, is obtained when the forces competing to make the profile positive and negative are balanced. A negative profile, the resist profile 26 in Figure 3C, can be obtained using a negative resist.

The present invention teaches a new method of forming the resist profile 26 of Figure 3C using a _positive_ resist.

Usually, vertical resist profiles are the most desirable for pattern transfer and dimensional control. However, negative profiles produced with negative photo-resists are sometime purposely created for metal lift off. In a normal process, negative profiles produced with negative photo-resists can cause problems during etching and critical dimension measurement. Also, high aspect ratio features tend to topple if the profile is too negative. Negative resists tend to provide poor resolution and may have a particularly harsh environmental impact.

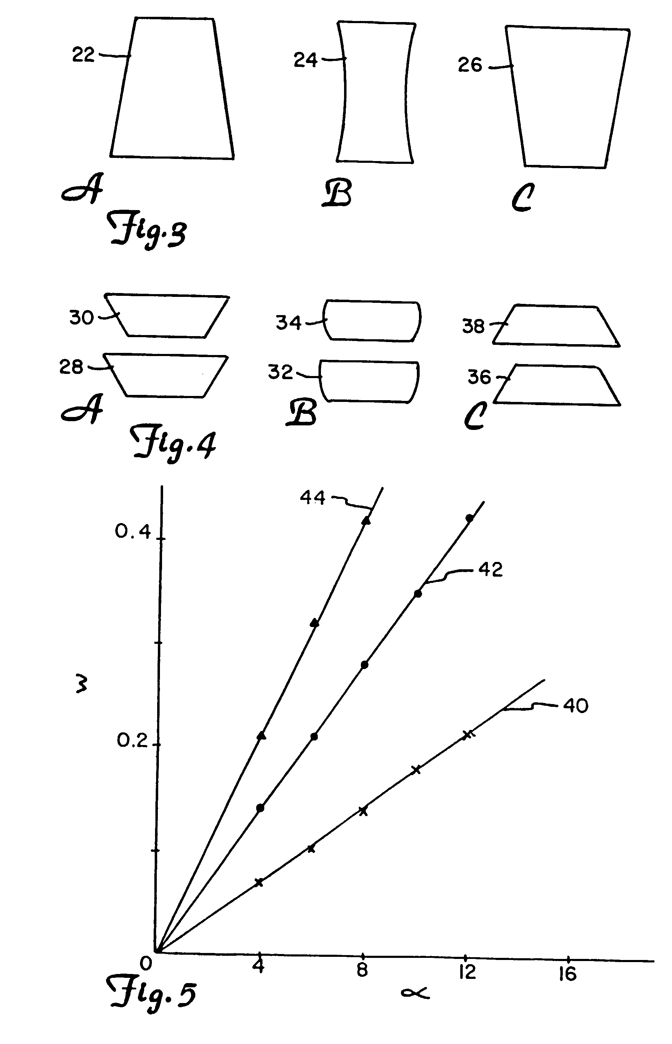

Possible pole tip profiles are shown in Figures 4A to 4C based upon the corresponding resist profiles of plating dams 22 to 26 of Figures 3A to 3C. Pole tip profiles 28 and 30 of Figure 4A are formed using the resist profile 22 of Figure 3A. Pole tip profiles 32 and 34 of Figure 4B are formed using the resist profile 24 of Figure 3B. Pole tip profiles 36 and 38 of Figure 4C are formed using the resist profile 26 of Figure 3C.

The positive resist profile (resist profile 22 in Figure 3A) based upon novolac resins and diazonaphthoquinone photo-sensitive additives remains the mainstay of the thin film head industry. The sloped side walls of resists, however, can have a significant effect upon the width of the resultant pole tip. A 6 µm thick plating dam comprising photo-resist with a slope of 83° can produce a pole tip with a difference between the top and the bottom of 3 µm pole thickness and at the bottom of only about 0.4 µm. As pole widths become smaller and smaller in response to demands for higher track densities, the sloped pole tip starts to have significant impact on head performance. Both the side fringing field and the effective pole width strongly depend upon the angle of sloped walls.

The difference in the width, $\underline{w}$, is related to the desired pole thickness, $\underline{h}$, and the angle of the sloped profile, $\alpha$, through the following simple equation:

$$w = h \text{ x tan } \alpha \approx h * \alpha$$

A graph of the preceding equation is shown in Figure 5 for $\underline{h}$ = 1 µm (line 40), $\underline{h}$ = 2 µm (line 42) and $\underline{h}$ = 3 µm (line 44).

In principle, the most critical alignment step in manufacturing the thin film magnetic read/write head lies in the registration between the top and bottom poles. Experimentally, it has been found by a magneto-optic technique that the distribution of the side fringing field and its gradient are influenced by the alignment of poles and control of their critical dimension (See, M.E. Re, R.R. Katti, W. Rave, and M. H. Kryder, IEEE Trans. Mag. MAG-23 (1987) p. 3161). Furthermore, measurements reveal that an erasure band exists when over-writing a side track which serves as a guard band to avoid off track interferences. Large step heights and the use of thick resist in thin film heads have constrained the alignment capability of a given lithographic tool to some extent. The requirement of overlay between the top and bottom is estimated to be within 5% to 10% of the effective track width. An accuracy in the alignment between the poles of better than 5% tolerance of the effective width may be necessary. The alignment accuracy can be significantly improved by the improved pole tip design of the present invention.

Figures 6A to 6E and Figures 7A to 7G show a side by side comparison between a standard lithographic process used to create a pole tip (Figures 6A to 6E) and one possible process used to create a pole tip according to the present invention (Figures 7A to 7G). Other processes, however, such as sputtering, dry etching, etc. may also be used. Figures 6A and 7A show substrates 46 and 56 spin coated and soft baked (90°C for about 45 minutes) with a respective photo-resist layer 48 and 58. In Figures 6B and 7B, the photo-resist layers 48 and 58 are exposed to actinic radiation. In Figure 6B, a mask 50 covers the area where the pole tip is not to be deposited. In Figure 7B, on the other hand, a mask 60 covers the area where the pole tip is to be deposited. Figures 7C and 7D depict two additional steps used with the present invention. In Figure 7C, the exposed photo-resist 50 is post baked. A post bake of 110°C for 2 to 5 minutes may be sufficient. In Figure 7D, following the post bake, the photo-resist layer 58 is subjected to flood actinic radiation exposure.

In Figures 6C and 7E, the photo-resist layers 48 and 58 are developed leaving a relief area for deposition of the pole tip. The resultant resist 58 in Figure 7E may have a thickness of about 4.2 µm. Next, in Figures 6D and 7F, lower pole tip permalloy magnetic films 52 and 62 are electro-plated onto the substrates 46 and 56 respectively. The photo-resist layers 48 and 58 are then stripped, leaving the pole tips 52 and 62 as shown in Figures 6E and 7G.

Using the process shown in Figures 7A to 7G, the resultant permalloy layer 62 has a positive or inverted slope as shown in Figure 7G. In Figure 8, the pole tip 62 formed as shown in Figures 7A to 7G is shown including an upper pole tip 64 and a gap 66. The upper pole tip 64 may be deposited using the normal process depicted in Figures 6A to 6E such that the slope of the edges of the upper pole tip 64 are the opposite of that shown for the lower pole tip 62. Prior to depositing the pole tip 64, the gap 66 may be filled with a non-magnetic material such as alumina ($Al_2O_3$). The symmetric nature of the pole tips 62 and 64 leads to improved operation of the thin film magnetic head 10 during read back and writing.

In the steps shown in Figures 6A to 6E, upon exposure to light, diazoquinone sensitiser (PAC) is converted into substituted indenecarboxylic acid via the sequence of elimination of nitrogen, Wolff rearrangement to the ketene and reaction with trace amounts of water in the resist. The final product is a carboxylic acid which is very soluble in the basic developer solution, and a positive image is yielded upon development. In order to change the latent positive image of Figures 6A to 6E to the negative one of Figures 7A to 7G, the indenecarboxylic acid is converted to an aqueous insoluble derivative, i.e. indene, by a decarboxylating step. Indene is not only insoluble in aqueous alkali solution, but it is also inert towards any further photo-chemical or thermal processing. The rate of this reaction is controlled by the temperature during the post exposure bake step. The indene produced is an aqueous-insoluble species, causing the initially exposed areas to become potentially as insoluble as the unexposed areas. If the decarboxylation step is followed by a flood exposure and aqueous base development using conventional positive resist developers, a negative tone image results. This is because the doubly exposed areas, where the indene product has been formed, are rendered insoluble. Development occurs in the initially unexposed areas because the flood exposure converts the resist in those areas to the normal photochemical products which are base soluble.

The mechanism of the decarboxylation has been studied and has been found that unlike image reversal systems based upon acid-catalysed, heat induced cross linking, which tend to favour negative slopes, side wall profiles of image reversal resists composed of diazonaphthoquinone and novolac resins with addition of aliphatic and aromatic amines can be controlled from negative to vertical to positive by changing the diazo content of the resist and the post exposure bake temperature.

The dimensions of the resultant trapezoidal pole tips have a wide possible range. The angle of the side walls may have little effect on head performance for pole tips having widths and heights of greater than 20 μm and less than 1 μm, respectively.

The present invention provides a thin film magnetic head having improved reading and writing characteristics. The mirror image symmetry of the pole tips across the gap region yields a narrow fringe field well suited for high density magnetic storage. The post bake and flood exposure process shown in Figures 7A to 7G may easily be implemented with current methods used in fabricating thin film heads.

The present invention has been described with reference to preferred embodiments, and various changes may be made in form and detail without departing from the scope of the invention which is specified in the appended claims. For example, many possible trapezoidal shapes may be employed having the face closest the gap region narrower than the face distal to the gap region. Additionally, the pole tip heights and the angles between the sides of the trapezoid may also be varied. The invention is applicable to thin film heads having an upper pole smaller than the lower pole.

**Claims**

1. A method for manufacturing a thin film magnetic read/write head, in which a photo-resist layer (58) is exposed to radiation of which a portion is masked by a mask (60) and is developed to provide a photo-resist pattern for forming a pole tip of the magnetic read/write head, characterised by baking the exposed photo-resist layer and further exposing the baked photo-resist layer to radiation in the absence of the mask before the developing step and by the removal of the previously masked portion of the photo-resist layer during the developing step.

2. A method according to claim 1 characterised in that the mask in the initial exposing step covers the portion of the photo-resist layer corresponding with the pole tip.

3. A method according to claim 1 or 2 characterised in that the photo-resist pattern defines a pole tip having a generally trapezoidal section such that an upper surface of the pole tip is narrower than a lower surface of the pole tip.

4. A method for manufacturing a thin film magnetic read/write head having an upper pole tip (64) and a lower pole tip (62), said method comprising:

    forming the lower pole tip (62) by exposing a first photo-resist layer (58) to radiation, a portion of which is masked by a mask (60), and developing the layer (58) to provide a first photo-resist pattern for forming the lower pole tip (62);
    forming the upper pole tip (64) by depositing gap material (66) on the lower pole tip (62), forming a further photo-resist pattern (48) defining over the gap material in a space where the further photo-resist pattern (48) is not present, the upper pole tip (64) having opposed walls which converge in a direction towards the gap material (66), and depositing a layer of permalloy magnetic film to provide the upper pole tip(64);

characterised in that formation of the lower tip (64) further comprises:

forming the first photo-resist pattern on a substrate (56);

baking the exposed first photo-resist layer (58);

further exposing the baked photo-resist layer to radiation in the absence of the mask (60) before the developing step;

removing the previously masked portion of the first photo-resist layer (58) during the developing step;

defining in a space where the first photo-resist pattern is not present, the lower pole tip (62) having opposed walls which converge in a direction away from the substrate; and

depositing a layer of permalloy magnetic film to provide the lower pole tip.

5. A method as claimed in claim 4 characterised in that the upper and lower pole tips are provided with generally mirror image symmetry across the gap.

6. A method as claimed in claim 4 characterised in that the upper and lower pole tips are provided with similar vertical sections.

7. A method as claimed in claim 4 or 6 characterised in that a spacing is provided between the opposed walls of the lower pole tip adjacent the gap which differs from a spacing provided between the opposed walls of the upper pole tip adjacent the gap.

8. A method as claimed in any of claims 4 to 7 characterised in that the opposed walls of each of the lower and upper pole tips provided incline.

9. A method as claimed in any of claims 4 to 8 characterised in that each of the lower and upper pole tips is provided with a trapezoidal section.

10. A method as claimed in any of claims 4 to 9 characterised in that each of the lower and upper pole tips is provided with a dimension between 0. 1 μm and 10 μm in a direction perpendicularly of the gap.

11. A method as claimed in any of claims 4 to 10 characterised in that each of the lower and upper pole tips is provided with a dimension less than 20 μm between the opposed walls.

**Patentansprüche**

1. Verfahren zur Herstellung eines Dünnfilm-Lese-/Schreib-Magnetkopfes, bei dem eine Photolackschicht (58) mit einer Strahlung, von der ein Teil durch eine Maske (60) abgesperrt wird, belichtet und entwickelt wird, um ein Photolack-Muster zur Bildung einer Polspitze des magnetischen Lese-/Schreibkopfes zu formen,

dadurch gekennzeichnet, daß die belichtete Photolackschicht gebacken und die gebackene Photolackschicht weiter einer Strahlung ohne Vorhandensein der Maske ausgesetzt wird, bevor der Entwicklungsschritt durchgeführt wird, und daß der vorher durch eine Maske abgedeckte Teil der Photolackschicht während des Entwicklungsschrittes entfernt wird.

2. Verfahren nach Anspruch 1,
dadurch gekennzeichnet, daß die Maske in dem anfänglichen Belichtungsschritt den Teil der Photolackschicht abdeckt, der der Polspitze entspricht.

3. Verfahren nach Anspruch 1 oder 2,
dadurch gekennzeichnet, daß das Photolack-Muster eine Polspitze mit einem allgemein trapezförmigen Querschnitt derart definiert, daß eine obere Oberfläche der Polspitze schmaler als eine untere Oberfläche der Polspitze ist.

4. Verfahren zur Herstellung eines Dünnfilm-Lese-/Schreib-Magnetkopfes mit einer oberen Polspitze (64) und einer unteren Polspitze (62), wobei das Verfahren folgende Schritte umfaßt:

Formung der unteren Polspitze (62) durch Belichten einer ersten Photolackschicht (28) mit einer Strahlung, von der ein Teil durch eine Maske (60) abgedeckt ist, und Entwickeln der Schicht (58) zur Schaffung eines ersten Photolackmusters zur Formung der unteren Polspitze (62),

Formung der oberen Polspitze (64) durch Abscheiden von Spaltmaterial (66) auf dem unteren Polstück (62), Ausbilden eines weiteren Photolackmusters (48), das über dem Spaltmaterial in einem Raum, in dem das weitere Photolack-Muster (48) nicht vorhanden ist, die obere Polspitze (64) definiert und gegenüberliegende Wände aufweist, die in einer Richtung auf das Spaltmaterial (66) konvergieren, und durch Abscheiden einer Schicht aus Permalloy-Magnetfilm zur Bildung der oberen Polspitze (64),

dadurch gekennzeichnet, daß die Formung der unteren Spitze (64) weiterhin folgende Schritte umfaßt:

Formung des ersten Photolack-Musters auf einem Substrat (56);

Backen der belichteten ersten Photolackschicht (58);

weiteres Belichten der gebackenen Photolackschicht mit einer Strahlung bei Fehlen der Maske (60) vor dem Entwicklungsschritt;

Entfernen des vorher maskierten Teils der ersten Photolackschicht (58) während des Entwicklungsschrittes;

Ausbilden der unteren Polspitze (62) in einem Raum, in dem das erste Photolack-Muster nicht vorhanden ist, wobei die Polspitze (62) gegenüberliegende Wände aufweist, die in einer Richtung von dem Substrat fort konvergieren, und

Abscheiden einer Schicht aus Permalloy-Magnetfilm zur Bildung der unteren Polspitze.

5. Verfahren nach Anspruch 4,
dadurch gekennzeichnet, daß die oberen und unteren Polspitzen mit einer im wesentlichen spiegelbildlichen Symmetrie längs des Spaltes versehen sind.

6. Verfahren nach Anspruch 4,
dadurch gekennzeichnet, daß die oberen und unteren Polspitzen mit ähnlichen vertikalen Querschnitten versehen sind.

7. Verfahren nach Anspruch 4 oder 6,
dadurch gekennzeichnet, daß ein Abstand zwischen den gegenüberliegenden Wänden der unteren Polspitze benachbart zu dem Spalt vorgesehen ist, der von einem Abstand abweicht, der zwischen den gegenüberliegenden Wänden der oberen Polspitze benachbart zum Spalt vorgesehen ist.

8. Verfahren nach einem der Ansprüche 4 bis 7,
dadurch gekennzeichnet, daß die gegenüberliegenden Wände jeder der unteren und oberen Polspitzen geneigt ausgebildet sind.

9. Verfahren nach einem der Ansprüche 4 bis 8,
dadurch gekennzeichnet, daß jeder der unteren und oberen Polspitzen mit einem trapezförmigen Querschnitt versehen ist.

10. Verfahren nach einem der Ansprüche 4 bis 9,
dadurch gekennzeichnet, daß jede der unteren und oberen Polspitzen mit einer Abmessung zwischen 0,1 µm und 10 µm in einer Richtung senkrecht zur Spalt versehen ist.

11. Verfahren nach einem der Ansprüche 4 bis 10,
dadurch gekennzeichnet, daß jeder der unteren und oberen Polspitzen mit einer Abmessung von weniger als 20 µm zwischen den gegenüberliegenden Wänden versehen ist.

## Revendications

1. Procédé de fabrication d'une tête de lecture/écriture magnétique à couche mince, dans laquelle une couche de photo-réserve (58) est exposée à un rayonnement, dont une partie est masquée par un masque (60), et est développée pour donner une configuration de photo-réserve pour former une pièce polaire de la tête de lecture/écriture magnétique, caractérisé en ce qu'il consiste à cuire la couche de photo-réserve exposée, puis à exposer encore à un rayonnement la couche de photo-réserve ainsi cuite, en l'absence du masque, avant l'étape de développement, et à éliminer la portion précédemment masquée de la couche de photo-réserve pendant l'étape de développement.

2. Procédé selon la revendication 1, caractérisé en ce que le masque, dans l'étape initiale d'exposition, recouvre la portion de la couche de photo-réserve correspondant à la pièce polaire.

3. Procédé selon la revendication 1 ou 2, caractérisé en ce que la configuration de photo-réserve définit une pièce polaire ayant une section généralement trapézoïdale, de telle sorte qu'une surface supérieure de la pièce polaire soit plus étroite qu'une surface inférieure de la pièce polaire.

4. Procédé de fabrication d'une tête de lecture/écriture magnétique à couche mince, ayant une pièce polaire supérieure (64) et une pièce polaire inférieure (62), ledit procédé consistant :

à former la pièce polaire inférieure (62) en exposant une première couche de photo-réserve (58) à un rayonnement, dont une partie est masquée par un masque (60), et à développer la couche (58) pour donner une première configuration de photo-réserve destinée à former la pièce polaire inférieure (62) ;
à former la pièce polaire supérieure (64) en déposant un matériau d'entrefer (66) sur la pièce polaire inférieure (62), à former une configuration de photo-réserve supplémentaire (48) définissant, sur le matériau d'entrefer, dans un espace dans lequel la configuration de photo-réserve supplémentaire (48) n'est pas présente, la pièce polaire supérieure (64) ayant des parois opposées qui convergent dans une direction allant vers le matériau d'entrefer (66), et à déposer une couche d'un film magnétique en permalloy pour réaliser la pièce polaire supérieure (64) ;
caractérisé en ce que la formation de la pièce inférieure (64) consiste en outre :

à former la première configuration de photo-réserve sur un substrat (56) ;

à cuire la première couche de photo-réserve exposée (58) ; à exposer encore à un rayonnement, la couche de photo-réserve ainsi cuite, en l'absence du masque (60) et avant l'étape de développement ;

à enlever pendant l'étape de développement la partie préalablement masquée de la première couche de photo-réserve (58) ;

à définir, dans un espace dans lequel la première configuration de photo-réserve n'est pas présente, la pièce polaire inférieure (62), qui possède des parois opposées qui convergent dans une direction s'éloignant du substrat ; et

à déposer une couche d'un film magnétique en permalloy pour réaliser la pièce polaire inférieure.

5. Procédé selon la revendication 4, caractérisé en ce que la pièce polaire supérieure et la pièce polaire inférieure sont pourvues d'une symétrie généralement spéculaire sur la totalité de l'entrefer.

6. Procédé selon la revendication 4, caractérisé en ce que la pièce polaire supérieure et la pièce polaire inférieure ont des coupes verticales analogues.

7. Procédé selon la revendication 4 ou 6, caractérisé en ce qu'on prévoit un espace entre les parois opposées de la pièce polaire inférieure, au voisinage immédiat de l'entrefer, qui est différent d'un espace prévu entre les parois opposées de la pièce polaire supérieure au voisinage immédiat de l'entrefer.

8. Procédé selon l'une quelconque des revendications 4 à 7, caractérisé en ce que les parois opposées de la pièce polaire inférieure et de la pièce polaire supérieure réalisent un plan incliné.

9. Procédé selon l'une quelconque des revendications 4 à 8, caractérisé en ce que la pièce polaire inférieure et la pièce polaire supérieure ont chacun une section trapézoïdale.

10. Procédé selon l'une quelconque des revendications 4 à 9, caractérisé en ce que la pièce polaire inférieure et la pièce polaire supérieure ont chacune une dimension comprise entre 0,1 et 10 $\mu$m, dans une direction perpendiculaire à l'entrefer.

11. Procédé selon l'une quelconque des revendications 4 à 10, caractérisé en ce que la pièce polaire inférieure et la pièce polaire supérieure ont chacune une dimension inférieure à 20 $\mu$m entre les parois opposées.

16

10

12

*Fig. 1*

8

8

10

12

14

18

16

20

21

*Fig. 2*

64

66

62

56

*Fig. 8*

22 —

𝒜

𝓕𝓲𝓰.3

24 —

𝐵

26 —

𝒞

30 —

28 —

𝒜

𝓕𝓲𝓰.4

34 —

32 —

𝐵

38 —

36 —

𝒞

44 —

0.4

42 —

3

40 —

0.2

0

4  8  12  16

𝓕𝓲𝓰.5

∝

A

48
46

A

58
56

B

50
50
48
46

B

60
58
56

C

48
48
46

C

58
56

D

48
52
48
46

D

58
56

E

52
46

E

58
58
56

𝓕𝓲𝓰.6
PRIOR ART

F

58
62
58
56

G

62
56

𝓕𝓲𝓰.7

11